(19) Europäisches Patentamt / European Patent Office / Office européen des brevets

(11) **EP 4 073 690 B1**

(12) **EUROPEAN PATENT SPECIFICATION**

(45) Date of publication and mention
of the grant of the patent:
**29.10.2025   Bulletin 2025/44**

(21) Application number: **20898883.2**

(22) Date of filing: **08.09.2020**

(51) International Patent Classification (IPC):
**G06T 7/70** *(2017.01)*        **G06V 10/82** *(2022.01)*
**G06T 7/80** *(2017.01)*        **G06T 7/579** *(2017.01)*
**G06V 10/20** *(2022.01)*       **G06V 10/26** *(2022.01)*
**G06V 10/44** *(2022.01)*       **G06V 10/764** *(2022.01)*
G06V 20/64 *(2022.01)*       G06V 20/58 *(2022.01)*
G06T 7/73 *(2017.01)*        G06T 7/77 *(2017.01)*
G06V 20/10 *(2022.01)*

(52) Cooperative Patent Classification (CPC):
**G06T 7/73; G06T 7/579; G06T 7/70; G06T 7/77;
G06T 7/80; G06V 10/255; G06V 10/26;
G06V 10/454; G06V 10/764; G06V 10/82;
G06V 20/10; G06V 20/64;** G06T 2207/10016;
G06T 2207/10028; G06T 2207/20072;        (Cont.)

(86) International application number:
**PCT/CN2020/114064**

(87) International publication number:
**WO 2021/114777 (17.06.2021 Gazette 2021/24)**

(54) **TARGET DETECTION METHOD, TERMINAL DEVICE, AND MEDIUM**

ZIELERFASSUNGSVERFAHREN, ENDGERÄT, UND MEDIUM

PROCÉDÉ DE DÉTECTION DE CIBLE, DISPOSITIF TERMINAL, ET SUPPORT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **12.12.2019   US 201962947314 P**

(43) Date of publication of application:
**19.10.2022   Bulletin 2022/42**

(73) Proprietor: **GUANGDONG OPPO MOBILE
TELECOMMUNICATIONS
CORP., LTD.
Dongguan, Guangdong 523860 (CN)**

(72) Inventor: **XU, Yi
Palo Alto, CA 94303 (US)**

(74) Representative: **Thorniley, Peter et al
Venner Shipley LLP
200 Aldersgate
London EC1A 4HD (GB)**

(56) References cited:
WO-A1-2017/201487        WO-A1-2019/092418
CN-A- 101 202 836        CN-A- 101 202 836
CN-A- 106 210 507        CN-A- 109 784 272
CN-A- 109 784 272        CN-A- 109 902 680
US-A1- 2018 012 411        US-A1- 2019 050 668
US-A1- 2019 220 775

• XIANG LI ET AL: "Object Detection in the Context
of Mobile Augmented Reality", ARXIV.ORG,
CORNELL UNIVERSITY LIBRARY, 201 OLIN
LIBRARY CORNELL UNIVERSITY ITHACA, NY
14853, 15 August 2020 (2020-08-15),
XP081742155

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
G06T 2207/20076; G06T 2207/20081;
G06T 2207/20084; G06T 2207/30201;
G06T 2207/30208; G06T 2207/30244;
G06V 2201/07

## Description

### TECHNICAL FIELD

The present disclosure relates to a field of image recognition technology, and more particularly, to a target detection method, a target detection device, a terminal device, and a medium.

### BACKGROUND

Specific objects such as faces or cars in an image can be detected through a target detection, which is widely used in a field of image recognition technology.

Currently, a mainstream target detection method is to divide a detection process into two stages. The first stage is to extract a number of regions (i.e., region proposals) that may include target objects based on an image by using a region proposal generation method. The second stage is to perform a feature extraction on the extracted region proposals by using a neural network, and then identify categories of the target objects in each region proposal by a classifier.

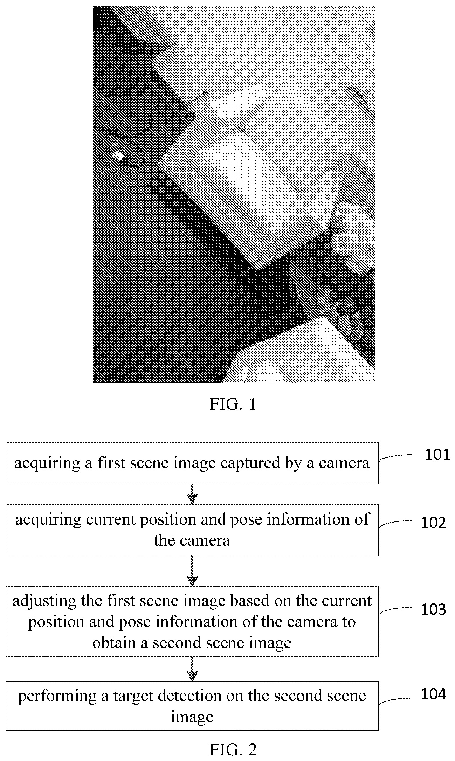

In the related art, since a camera may be in a landscape mode or rotated to a certain angle in a certain direction when shooting an image of an object, an orientation of the object in the captured image may be different from an actual orientation of the object, that is, the captured image is also rotated. For example, when the camera takes an image in a certain orientation, the captured image may be rotated as illustrated in FIG. 1. When detecting such a rotated target image, data enhancement is usually performed, that is, various geometric transformations are performed on training data of a neural network in advance to enable the neural network to learn characteristics of the rotated object, and then the target detection is performed using the neural network generated by the training. This implementation process is complicated due to a need for data enhancement, such that a lot of computing time and computing resources are wasted.

CN109784272A provides a container identification system and a container identification method. CN101202836A discloses an electronic sensing device and a method for verifying photograph data. US2018012411A1 provides augmented reality methods and systems. WO2019092418A1 provides a method of computer vision based localisation and navigation, and a system for performing the same.

### SUMMARY

The invention is set out in the appended set of claims. Embodiments of a first aspect provide a target detection method. The method includes: acquiring a first scene image captured by a camera, the first scene image including an object; acquiring current position and pose information of the camera; adjusting the first scene image based on the current position and pose information of the camera to obtain a second scene image; and performing a target detection on the second scene image using a neural network. An orientation of the object in the training data for training the neural network is the same as an orientation of the object in the second scene image, and the orientation of the object in the second scene image is the same as an actual orientation of the object. The adjusting the first scene image based on the current position and the pose information of the camera includes: determining a rotation angle and a rotation direction of the first scene image based on the current position and pose information of the camera; and rotating, based on the rotation angle and the rotation direction, the first scene image by the rotation angle in a direction opposite to the rotation direction, to obtain the second scene image, a horizon direction in the second scene image being parallel to a lateral direction of the second scene image.

Embodiments of a second aspect provide a terminal device, comprising: a memory, a processor, and computer programs stored in the memory and executable by the processor. When the processor executes the computer programs, the target detection method according to embodiments of the first aspect is implemented.

Embodiments of a third aspect provide a computer readable storage medium, storing computer programs therein. When the computer programs are executed by a processor, the target detection method according to embodiments of the first aspect is implemented.

### BRIEF DESCRIPTION OF THE DRAWINGS

The above and/or additional aspects and advantages of embodiments of the present disclosure will become apparent and more readily appreciated from the following descriptions made with reference to the drawings, in which:

FIG. 1 is a schematic diagram of a rotated image according to an embodiment of the present disclosure.
FIG. 2 is a flow chart of a target detection method according to an embodiment of the present disclosure.
FIG. 3 is a schematic diagram of an unadjusted scene image according to an embodiment of the present disclosure.
FIG. 4 is a schematic diagram of an adjusted scene image according to an embodiment of the present disclosure.
FIG. 5 is a flow chart of a target detection method according to an embodiment of the present disclosure.
FIG. 6 is a flow chart of a method of generating a plurality of three-dimensional regions according to an embodiment of the present disclosure.

FIG. 7 is a flow chart of a method of generating region proposals according to an embodiment of the present disclosure.

FIG. 8 is a block diagram of a target detection device according to an embodiment of the present disclosure.

FIG. 9 is a block diagram of a target detection device according to another embodiment of the present disclosure.

FIG. 10 is a block diagram of a terminal device according to an embodiment of the present disclosure.

## DETAILED DESCRIPTION

Embodiments of the present disclosure will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present disclosure, and are not construed to limit embodiments of the present disclosure.

When detecting a rotated target image, data enhancement is usually performed, that is, various geometric transformations are performed on training data of a neural network in advance to enable the neural network to learn characteristics of a rotated object, and then a target detection is performed using the neural network generated by the training. This implementation process is complicated due to a need for data enhancement, such that a lot of computing time and computing resources are wasted. For this, embodiments of the present disclosure provide a target detection method. With the method, after acquiring a first scene image captured by a camera, current position and pose information of the camera is acquired, the first scene image is adjusted based on the current position and pose information of the camera to obtain a second scene image which is adjusted, and a target detection is performed on the second scene image, so that the target detection can be performed on the scene image without data enhancement, the process is simple, the computing time and computing resources for the target detection are saved, and the efficiency of the target detection is improved.

A target detection method, a target detection device, a terminal device, and a computer readable storage medium are described below with reference to the attached drawings.

The target detection method according to the embodiments of the present disclosure is described below in combination with FIG. 2. FIG. 2 is a flow chart of a target detection method according to an embodiment of the present disclosure.

As illustrated in FIG. 2, the target detection method according to the present disclosure include the following acts.

At block 101, a first scene image captured by a camera is acquired.

In detail, the target detection method according to the present disclosure may be executed by the target detection device according to the present disclosure. The target detection device may be configured in a terminal device to perform a target detection on a scene image of a scene. The terminal device according to the embodiments of the present disclosure may be any hardware device capable of data processing, such as a smart phone, a tablet computer, a robot, and a wearable device like a head mounted mobile device.

It can be understood that a camera can be configured in the terminal device to capture the first scene image, so that the target detection device can obtain the first scene image captured by the camera.

The scene may be an actual scene or a virtual scene. The first scene image may be static or dynamic, which is not limited herein. In addition, the first scene image captured by the camera may be an un-rotated image in which an object has an orientation consistent with an actual orientation of the object, or may be a rotated image in which the object has an orientation not consistent with the actual orientation of the object, which is not limited herein.

At block 102, current position and pose information of the camera is acquired.

At block 103, the first scene image is adjusted based on the current position and pose information of the camera to obtain a second scene image.

The current position and pose information can include the camera's orientation.

In a specific implementation, a simultaneous localization and mapping (hereinafter, SLAM for short) system can be used to obtain the current position and pose information of the camera.

The SLAM system utilized in the embodiments of the present disclosure will be briefly described below.

The SLAM system, as its name implies, enables both positioning and map construction. When a user holds or wears a terminal device and starts from an unknown location in an unknown environment, the SLAM system in the terminal device estimates a position and a pose of the camera at each moment based on feature points observed by the camera during the movement, and fuses image frames acquired at different times by the camera to reconstruct a complete three-dimensional map of the scene around the user. The SLAM system is widely used in robot positioning navigation, virtual reality (VR), augmented reality (AR), drone, and unmanned driving. The position and the pose of the camera at each moment can be represented by a matrix or a vector containing rotation and translation information.

The SLAM systems can be generally divided into a visual front-end module and an optimizing back-end module.

The main tasks of the visual front-end module are solving a camera pose transformation between adjacent frames through a feature matching by using the image frames acquired by the camera at different times during the movement, and realizing a fusion of the image frames to reconstruct a map.

The visual front-end module relies on the terminal device such as a sensor installed in a robot or a smart phone. Common sensors include cameras (such as monocular cameras, binocular cameras, TOF cameras), inertial measurement units (IMUs), and laser radars, are configured to collect various types of raw data in the actual environment, including laser scanning data, video image data, and point cloud data.

The SLAM system's optimizing back-end module is mainly to optimize and fine-tune the inaccurate camera pose and the reconstruction map obtained by the visual front-end module, which can be separated from the visual front-end module as an offline operation or integrated into the visual front-end module.

The current SLAM system is usually based on visual-inertial odometry (VIO), which tracks the position and the orientation of the camera by synchronously processing visual signals and inertial measurement unit (IMU) signals.

The following is a brief introduction to a process of determining the position and pose information of the camera by the SLAM system.

Initialization is performed. In detail, feature points may be identified from the scene image acquired by the camera, the feature points extracted from the scene image and acquired at different times are correlated to find a correspondence between the feature points extracted at different times, and a three-dimensional position of the feature point and a positional relationship of the camera can be calculated according to the correspondence.

After the initialization, as the camera acquires content that has not been previously acquired, the SLAM system can track the camera pose in real time and incrementally expand the number of three-dimensional points.

Further, after acquiring the current position and pose information of the camera, the first scene image may be adjusted based on the current position and pose information of the camera to obtain the second scene image which is adjusted.

In detail, when adjusting the first scene image, a rotation angle of the first scene image is determined based on the current position and pose information of the camera, so that the first scene image is rotated based on the rotation angle to obtain the second scene image. The orientation of the object in the second scene image is the same as the actual orientation of the object. In other words, a horizon direction in the second scene image is parallel to a lateral direction of the second scene image.

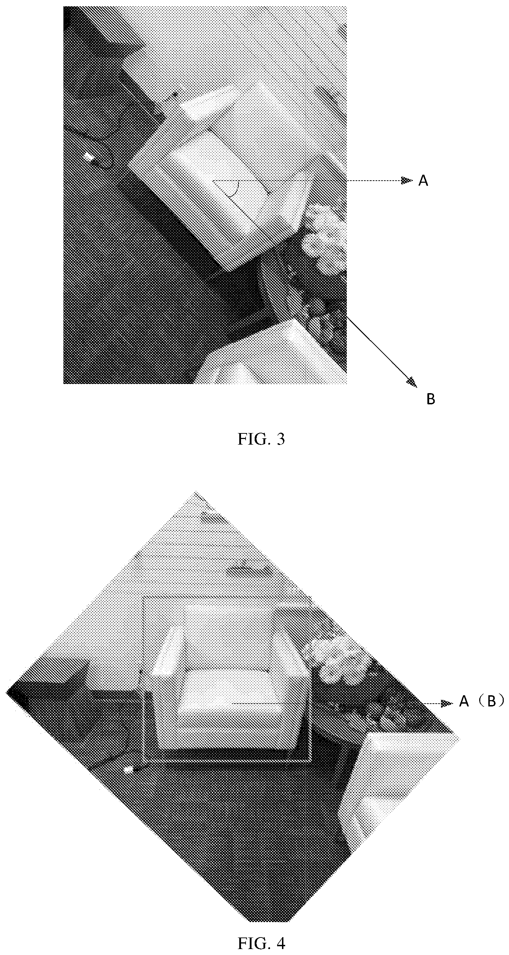

For example, it is assumed that FIG. 3 is the first scene image captured by the camera. According to the current position and pose information of the camera acquired by the SLAM system when the camera captures the image, it is determined that the rotation angle of the first scene image is 45 degrees clockwise, then the first scene image can be rotated anticlockwise by 45 degrees to make the horizon direction (direction B in FIG. 3) of the first scene image illustrated in FIG. 3 parallel to the lateral direction (direction A in FIG. 3) of the first scene image and obtain the second scene image illustrated in FIG. 4.

It should be noted that the technology of obtaining the current position and pose information of the camera through the SLAM system is relatively mature, which is not described herein.

At block 104, a target detection is performed on the second scene image.

In detail, after adjusting the first scene image to obtain the second scene image, the second scene image may be divided into a plurality of region proposals. Feature maps of the plurality of region proposals are respectively extracted using a neural network. A category of an object in each region proposal is identified using a classification method, and a bounding box regression is performed for each object to determine a size of each object, such that the target detection performed on the plurality of region proposals in the second scene image can be realized to determine a target object to be detected in the second scene image. Since the second scene image is a scene image obtained by adjusting a direction of the first scene image, a target detection result of the second scene image is a target detection result for the first scene image but merely the target object to be detected has different orientations in the first scene image and the second scene image.

The neural network used for extracting the feature map of the region proposals may be any neural network for extracting features, the category of the object may be determined by using any neural network for classifying images, and when the bounding box regression is performed, any neural network for bounding box regression can be used, which are not limited herein.

It should be noted that, in the embodiments of the present disclosure, the direction of the second scene image is related to training data of the neural network used for performing the target detection on the second scene image. For example, in an embodiment of the present disclosure, in the training data for training the neural network, the lateral direction of the image is usually the horizon direction in the image, then when adjusting the first scene image, the first scene image is adjusted to enable the horizon direction of the adjusted image to be parallel to the lateral direction of the adjusted image correspondingly. That is, an orientation of an object in the training data for training the neural network is the same as the orientation of the object in the second scene image. In a specific implementation, the first scene image may be adjusted to have other directions as needed, which is not limited herein.

In addition, it can be understood that the orientation of the object in the first scene image captured by the camera may be the same as or different from the orientation of the object in the training data for training the neural network. In an embodiment of the present disclosure, if it is determined that the object in the first scene image captured by the camera has the same orientation as the object in the training data for training the neural network, the target detection can be directly performed on the first scene image.

That is, in the embodiments of the present disclosure, before adjusting the first scene image, the method further includes: determining, based on the current position and pose information of the camera, that the first scene image meets an adjustment requirement. The adjustment requirement may be that the rotation angle of the first scene image is greater than 0 degree.

In detail, if it is determined that the first scene image captured by the camera meets the adjustment requirement based on the current position and pose information of the camera, the first scene image may be adjusted based on the current position and pose of the camera to obtain the second scene image adjusted. Then, the second scene image is subjected to the target detection. If the first scene image does not meet the adjustment requirement, the target detection is directly performed on the first scene image captured by the camera.

In an example embodiment, an angle threshold may be set, and the adjustment requirement is set as the rotation angle of the first scene image greater than the angle threshold, which is not limited herein.

It can be understood that, in the target detection method according to the present disclosure, since the first scene image is adjusted based on the current position and pose of the camera before the target detection is performed, the second scene image adjusted is obtained. The orientation of the object in the second scene image is the same as the orientation of the object in the training data of the neural network, such that there is no need to perform various transformations on the training data of the neural network in advance to enable the neural network to learn characteristics of the rotated object. The neural network generated by the training data trained in a single direction can be directly used to perform the target detection on the second scene image, so the process is simple, the computing time and computing resources of the target detection are saved, and the efficiency of the target detection is improved.

With the target detection method according to the embodiments of the present disclosure, after acquiring a first scene image captured by a camera, current position and pose information of the camera is acquired, the first scene image is adjusted based on the current position and pose information of the camera to obtain the second scene image adjusted, and a target detection is performed on the second scene image. In this way, the target detection can be performed on the scene image without data enhancement, the process is simple, the computing time and computing resources for the target detection are saved, and the efficiency of the target detection is improved.

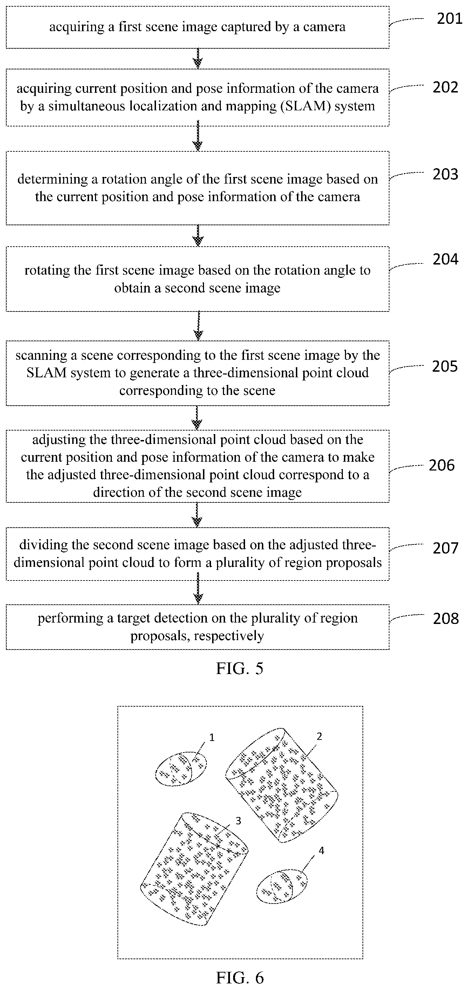

According to the above analysis, after the first scene image is adjusted to obtain the second scene image adjusted, the second scene image can be directly divided into a plurality of region proposals by the method described in the foregoing embodiments, and then the subsequent target detection is executed. In a possible implementation, in order to improve the accuracy of the generated region proposals, a three-dimensional point cloud corresponding to the second scene image may be acquired by the SLAM system, the second scene image is divided by using the three-dimensional point cloud to form a plurality of region proposals, and the subsequent target detection is executed. The target detection method according to the embodiments of the present disclosure is further described below with reference to FIG. 5. FIG. 5 is a flow chart of a target detection method according to another embodiment of the present disclosure.

As illustrated in FIG. 5, the target detection method according to the present disclosure may include the following steps.

At block 201, a first scene image captured by a camera is acquired.

At block 202, current position and pose information of the camera is acquired by a simultaneous localization and mapping (SLAM) system.

At block 203, a rotation angle of the first scene image is determined based on the current position and pose information of the camera.

At block 204, the first scene image is rotated based on the rotation angle to obtain a second scene image.

The specific implementation process and principle of the above acts on blocks 201-204 can refer to the description of the above embodiment, which is not repeated here.

At block 205, a scene corresponding to the first scene image is scanned by the SLAM system to generate a three-dimensional point cloud corresponding to the scene.

Any existing technologies can be used to scan the scene corresponding to the first scene image through the SLAM system to generate the three-dimensional point cloud corresponding to the scene, which is not limited herein.

In an example embodiment, the camera included in the terminal device may be calibrated in advance to determine internal parameters of the camera, and the scene is scanned using the calibrated camera to generate the three-dimensional point cloud corresponding to the scene through the SLAM system.

To calibrate the camera, one can print a 7*9 black and white calibration board on an A4 paper, and a size of one checkerboard of the calibration board is measured as 29.1 mm * 29.1 mm. The calibration board is posted on a neat and flat wall, and a video is shot against the calibration board using the camera to be calibrated. During the shooting, the camera is continuously moved to shoot the calibration board from different angles and at different distances. A calibration program is written using OpenCV packaged algorithm functions. The video is converted into images, and 50 of the images are selected as calibration images which are inputted into the calibration program together with basic parameters of the calibration board, and the internal parameters of the camera can be calculated.

A point in a world coordinate system is measured in terms of physical length dimensions, and a point in an image plane coordinate system is measured in pixels. The inner parameters are used to make a linear transformation between the two coordinate systems. A point Q (X, Y, Z) in a space can be transformed by the inner parameter matrix to obtain a corresponding point q (u, v) of the point under the pixel coordinate system that is projected on the image plane through the ray:

$$Z \begin{bmatrix} u \\ v \\ 1 \end{bmatrix} = K \begin{bmatrix} X \\ Y \\ Z \end{bmatrix}.$$

K is the inner parameter matrix of the camera.

$$K = \begin{bmatrix} \dfrac{f}{dx} & 0 & u_0 \\ 0 & \dfrac{f}{dy} & v_0 \\ 0 & 0 & 1 \end{bmatrix},$$

in which, f is a focal length of the camera in units of millimeters, dx and dy respectively represent a length and a width of each pixel in units of millimeters, $u_0$, $v_0$ represent coordinates of a center of the image usually in units of pixels.

According to the inner parameters of the camera and a height and a width of the scene image obtained when the camera is shooting the scene, a camera parameter file is written according to a format required by a DSO program, and the camera parameter file is used as an input to start the DSO program. In other words, the three-dimensional point cloud of the scene can be constructed in real time when the camera is used to scan the scene.

It should be noted that the act at block 205 may be performed after the act at block 204, or may be performed before the act at block 204, which is not limited herein, the act at block 205 only needs to be performed before the act at block 206.

At block 206, the three-dimensional point cloud is adjusted based on the current position and pose information of the camera, to make the adjusted three-dimensional point cloud correspond to a direction of the second scene image.

In detail, the direction of the three-dimensional point cloud corresponding to the scene is adjusted in a manner similar to the act at block 103, so that the adjusted three-dimensional point cloud corresponding to the scene corresponds to the direction of the second scene image on which the target detection is to be performed.

It should be noted that, in the embodiments of the present disclosure, when generating the three-dimensional point cloud corresponding to the second scene image, the three-dimensional point cloud corresponding to the first scene image is formed and the three-dimensional point cloud is adjusted based on the current position and pose information of the camera to make the three-dimensional point cloud corresponds to the direction of the second scene image. In an example embodiment, after the current position and pose information of the camera is acquired by the SLAM system, the current position and pose information of the camera determined by the SLAM system is directly used to scan the scene corresponding to the second scene image to directly generate the three-dimensional point cloud corresponding to the second scene image, which is not limited herein.

At block 207, the second scene image is divided based on the adjusted three-dimensional point cloud to form a plurality of region proposals.

In detail, the act at block 207 can be implemented by the following steps.

At block 207a, the adjusted three-dimensional point cloud is divided to form a plurality of three-dimensional regions.

At block 207b, the plurality of three-dimensional regions are projected to the second scene image to form the plurality of region proposals.

In detail, the act at block 207 can be implemented in the following manners.

First manner

It can be understood that the same object usually has identical or similar texture, color and other characteristics, but different objects have different texture, color and other characteristics. Correspondingly, in the adjusted three-dimensional point cloud, a similarity between the three-dimensional points corresponding to the same object is usually greater than a similarity between the three-dimensional point of the object and the three-dimensional point of another object. Then, in an embodiment of the present disclosure, when the adjusted three-dimensional point cloud is divided to form the plurality of three-dimensional regions, based on the similarity between the three-dimensional points in the adjusted three-dimensional point cloud, the three-dimensional points having a high similarity (the higher the similarity is, the closer the three-dimensional points are) are merged together, such that a plurality of three-dimensional point sub-clouds can be formed, and an area where each three-dimensional point sub-cloud is located is configured as a three-dimensional region, thereby dividing the three-dimensional point cloud into a plurality of three-dimensional regions.

In detail, the three-dimensional points in the three-dimensional point cloud can be classified into a plurality of categories by using a clustering algorithm, so that the similarity between the three-dimensional points of the same category is greater than the similarity between the three-dimensional point of one category and the three-dimensional point of another category. The three-dimensional points of the same category are merged together, such that a plurality of three-dimensional point sub-clouds can be formed, and an area occupied by one three-dimensional point sub-cloud is configured as a three-dimensional region, thereby dividing the three-dimensional point cloud into a plurality of three-dimensional regions.

The clustering algorithm may be a distance-based clustering algorithm, such as a k-means clustering algorithm, or a graph-based clustering algorithm, such as a graph-cut algorithm, or other arbitrary clustering algorithms, which is not limited in this disclosure.

The act at block 207a can be implemented in the following manner.

The three-dimensional points in the three-dimensional point cloud are merged by a clustering algorithm and the merged three-dimensional point cloud is divided to form a plurality of three-dimensional regions.

For example, suppose the three-dimensional points illustrated in FIG. 6 are a portion of three-dimensional points in the adjusted three-dimensional point cloud. In Fig. 6, by using the clustering algorithm, the three-dimensional points in a three-dimensional frame 1 are classified into one category, the three-dimensional points in a three-dimensional frame 2 are classified into one category, the three-dimensional points in a three-dimensional frame 3 are classified into one category, and the three-dimensional points in a three-dimensional frame 4 are classified into one category. The three-dimensional points in the three-dimensional frames 1, 2, 3, and 4 can be merged respectively to form four three-dimensional point sub-clouds, and the area occupied by each three-dimensional point sub-cloud is configured as a three-dimensional region, thereby realizing the division of the merged three-dimensional point cloud into four three-dimensional regions.

The three-dimensional points in the three-dimensional point cloud are merged by a clustering algorithm and the merged three-dimensional point cloud is divided to form the plurality of three-dimensional regions, as described below by taking the K-Means algorithm as the clustering algorithm.

In detail, the number of the three-dimensional regions to be formed may be preset. The three-dimensional points in the three-dimensional point cloud are classified by the k-Means algorithm into a total number k of categories, and the number N of three-dimensional points in the three-dimensional point cloud is counted. k three-dimensional cluster center points are generated randomly, and it is determined which cluster center point of the k three-dimensional cluster center points does each three three-dimensional point of the N three-dimensional points correspond to, i.e., the category of each three-dimensional point is determined and the three-dimensional points belonging to the category of each cluster center point are determined. For each cluster center point, a coordinate of a center point of all the three-dimensional points belonging to the category of the cluster center point is determined, and a coordinate of the cluster center point is modified as the coordinate of the center point. It is again determined which cluster center point of the k cluster center points does each three-dimensional point correspond to, and the coordinate of each cluster center point is determined according to the coordinate of the center point of all the three-dimensional points belonging to the category of the cluster center point. The above process is repeated until the algorithm converges. In this way, all the three-dimensional points can be classified into k categories and the three-dimensional points in each category are merged together, such that k three-dimensional point sub-clouds can be formed, and the area occupied by each three-dimensional point sub-cloud is configured as a three-dimensional region, thereby realizing the division of the merged three-dimensional point cloud into k three-dimensional regions.

When determining which one of the k three-dimensional cluster center points a certain three-dimensional point corresponds to, a distance between the three-dimensional point and each of the k cluster center points may be calculated, and the cluster center point with the shortest distance to the three-dimensional point is regarded as the cluster center point corresponding to the three-dimensional point.

Second manner

It can be understood that an object usually has a certain shape, for example, a cup can be cylindrical, a door can be square. Correspondingly, for an object with a certain shape in a scene, the three-dimensional points in a corresponding three-dimensional point cloud can also be fitted as a specific shape. In an embodiment of the present disclosure, the three-dimensional points in the three-dimensional point cloud may be fitted with a plurality of preset models to divide the three-dimensional point cloud into a plurality of three-dimensional regions corresponding respectively to the plurality of preset models.

The act at block 207a can be implemented in the following manner.

The plurality of three-dimensional points in the three-dimensional point cloud may be fitted with a plurality of preset models to divide the three-dimensional point cloud into a plurality of three-dimensional regions corresponding respectively to the plurality of preset models.

The preset model may be a preset geometric basic model, such as a sphere, a cylinder, and a plane, or may be a complex geometric model composed of geometric basic models, or may be any other preset model, which is not limited herein.

In a specific implementation, if the three-dimensional points in the three-dimensional point cloud can be fitted with a plurality of preset models, the three-dimensional points corresponding to the plurality of preset models can be merged into a plurality of three-dimensional point sub-clouds, and the three-dimensional points in one three-dimensional point sub-cloud corresponds to one preset model, and the area occupied by each three-dimensional point sub-cloud is configured as a three-dimensional region, so that the three-dimensional point cloud can be divided into a plurality of three-dimensional regions corresponding respectively to the plurality of preset models.

The manner of fitting the three-dimensional points in the three-dimensional point cloud with the preset models may be a least square method or any other manner, which is not limited herein.

For example, assuming that in the adjusted three-dimensional point cloud, three-dimensional points identified as 1-200 are a portion of the three-dimensional points, the three-dimensional points identified as 1-100 can be fitted with a preset model 1, and the three-dimensional points identified as 101-200 can be fitted with a preset model 2, then the three-dimensional points identified as 1-100 can be merged into a three-dimensional point sub-cloud A, and the three-dimensional points identified as 101-200 can be merged into a three-dimensional point sub-cloud B. The area occupied by three-dimensional point sub-cloud A is configured as a three-dimensional region, and the area occupied by the three-dimensional point sub-cloud B is also configured as a three-dimensional region.

Taking the cylinder as one of the preset models as an example, when fitting the three-dimensional points in the three-dimensional point cloud with the cylinder, the cylinder is parameterized, for example, the cylinder in space can be represented by parameters such as a center coordinate (X, Y, Z), a bottom radius, a height, and an orientation in three-dimensional space, and several three-dimensional points are randomly selected from the three-dimensional point cloud by using a RANdom SAmple Consensus (RANSAC) algorithm. Assuming that these three-dimensional points are on a cylinder, the parameters of the cylinder is calculated, and the number of three-dimensional points of all the three-dimensional points in the three-dimensional point cloud that are on the cylinder is counted, and it is determined whether the number exceeds a preset number threshold, if not, several three-dimensional points are selected again to repeat the process, otherwise, it can be determined that the three-dimensional points on the cylinder and in the three-dimensional point cloud can be fitted with the cylinder, and the algorithm continues to determine whether the three-dimensional points in the three-dimensional point cloud can be fitted with other preset models, thereby merging the three-dimensional points respectively fitted with the plurality of preset models to form a plurality of three-dimensional point sub-clouds. The three-dimensional points in each three-dimensional point sub-cloud correspond to one preset model, and the area occupied by each three-dimensional point sub-cloud is configured as a three-dimensional region, so that the three-dimensional point cloud can be divided into a plurality of three-dimensional regions corresponding respectively to the plurality of preset models.

The number threshold can be set as needed, which is not limited herein.

In addition, a distance threshold can be set. A distance of each three-dimensional point in the three-dimensional point cloud to the cylinder can be calculated, and a three-dimensional point whose distance is less than the distance threshold is determined as a three-dimensional point on the cylinder.

It should be noted that the above first manner and second manner are only two examples of dividing the adjusted three-dimensional point cloud to form the plurality of three-dimensional regions. In a practical application, those skilled in the art can divide the adjusted three-dimensional point cloud in any other way, which is not limited herein.

Further, after the adjusted three-dimensional point cloud is divided to form the plurality of three-dimensional regions, the plurality of three-dimensional regions are projected onto the second scene image, and the obtained two-dimensional bounding boxes corresponding respectively to the three-dimensional regions are configured to indicate the plurality of region proposals to be determined in this disclosure.

In detail, a coordinate transformation can be used to convert a coordinate of each three-dimensional point in a three-dimensional region from an object coordinate system to a world coordinate system, to a camera coordinate system, to a projected coordinate system, and to an image coordinate system sequentially. In this way, each three-dimensional region is projected to the scene image. After the projection, a two-dimensional bounding box corresponding to a three-dimensional region is configured to indicate a region proposal, thereby generating the plurality of region proposals.

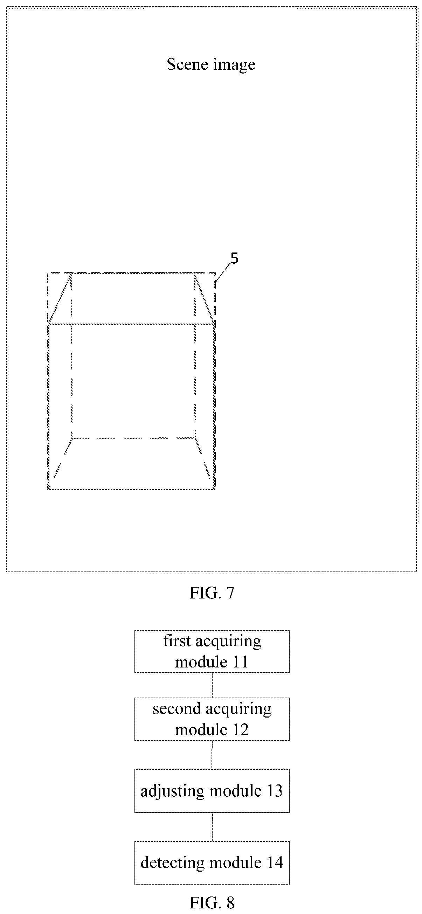

For example, suppose the cube in FIG. 7 is a three-dimensional region formed by dividing the adjusted three-dimensional point cloud. After projecting the three-dimensional region to the second scene image, the two-dimensional bounding box (indicated by a dotted line box 5 in FIG. 7) corresponding to the three-dimensional region is configured to indicate a region proposal.

It can be understood that, when performing the target detection in the embodiments of the present disclosure, the second scene image is divided by using the three-dimensional point cloud corresponding to the scene generated by scanning the scene through the SLAM system to form the plurality of region proposals. By combining the three-dimensional information, the generated region proposals can be more accurate, and less in number.

It should be noted that, in the foregoing embodiments, after the scene is scanned by the SLAM system to generate the three-dimensional point cloud corresponding to the scene, the adjusted three-dimensional point cloud is divided to form the plurality of three-dimensional regions, and the plurality of three-dimensional regions are projected to the second scene image adjusted to form the plurality of region proposals. In actual applications, a dense three-dimensional point cloud corresponding to the scene may be acquired by a depth camera, or the three-dimensional point cloud of the scene may be acquired by other methods, and adjustments and dividing and subsequent operations are performed on the three-dimensional point cloud to form the plurality of region proposals, which is not limited in this disclosure.

At block 208, a target detection is performed on the plurality of region proposals, respectively

In detail, after forming the plurality of region proposals, a feature map of the plurality of region proposals may be extracted by using a neural network, and the classification method is adopted to identify the categories of the objects in each region proposal. The bounding box regression is performed for each object to determine the size of each object, thereby realizing the target detection on the plurality of region proposals and determining a target object to be detected in the scene image.

The neural network used for extracting the feature map of region proposals may be any neural network for extracting features, any neural network for classifying images can be used to determine the category of the object, and when the bounding box regression is performed, any neural network for bounding box regression can be utilized, which are not limited herein.

It can be understood that the target detection method according to the embodiments of the present disclosure can be applied to an AR software development kit (SDK) to provide a target detection function, and a developer can utilize the target detection function in the AR SDK to realize the recognition of objects in the scene, and further realize various functions, such as product recommendation in the e-commerce field.

With the target detection method according to the embodiments of the present disclosure, before performing the target detection on the first scene image, the first scene image is adjusted based on the current position and pose information of the camera to obtain the second scene image adjusted, and the target detection is performed on the second scene image, so that the target detection can be performed on the scene image without data enhancement, the process is simple, the computing time and computing resources for the target detection are saved, and the efficiency of the target detection is improved. Moreover, the three-dimensional point cloud corresponding to the scene generated by the SLAM system is used to assist in generating the plurality of region proposals, so that the generated region proposals are more accurate and less in number. Since the number of region proposals is reduced, the subsequent processing such as feature extraction on the region proposals takes less computing time and consumes less computing resources, thereby saving the computing time and computing resource for the target detection, and improving the efficiency of the target detection.

The target detection device according to the embodiments of the present disclosure is described below with reference to FIG. 8. FIG. 8 is a block diagram of a target detection device according to an embodiment of the present disclosure.

As illustrated in FIG. 8, the target detection device includes: a first acquiring module 11, a second acquiring module 12, an adjusting module 13, and a detecting module 14.

The first acquiring module 11 is configured to acquire a first scene image captured by a camera.

The second acquiring module 12 is configured to acquire current position and pose information of the camera.

The adjusting module 13 is configured to adjust the first scene image based on the current position and pose information of the camera to obtain a second scene image.

The detecting module 14 is configured to perform a target detection on the second scene image.

In detail, the target detection device can perform the target detection method described in the foregoing embodiments. The device may be configured in a terminal device to perform the target detection on the scene image of the scene. The terminal device in the embodiments of the present disclosure may be any hardware device capable of data processing, such as a smart phone, a tablet computer, a robot, a wearable device such as a head mounted mobile device.

In an example embodiment, the second acquiring module 12 is configured to acquire the current position and pose information of the camera by the SLAM system.

In an example embodiment, the adjusting module 13 is configured to determine a rotation angle of the first scene image based on the current position and pose information of the camera; and rotate the first scene image based on the rotation angle.

It should be noted that the implementation process and technical principle of the target detection device in this embodiment refer to the foregoing illustration of the target detection method in the embodiments of the first aspect, and details are not described herein again.

With the target detection device according to the embodiments of the present disclosure, a first scene image captured by a camera is acquired, current position and pose information of the camera is acquired, then the first scene image is adjusted based on the current position and pose information of the camera to obtain a second scene image adjusted, and a target detection is performed on the second scene image. In this way, the target detection can be performed on the scene image without data enhancement, the process is simple, the computing time and computing resources for the target detection are saved, and the efficiency of the target detection is improved.

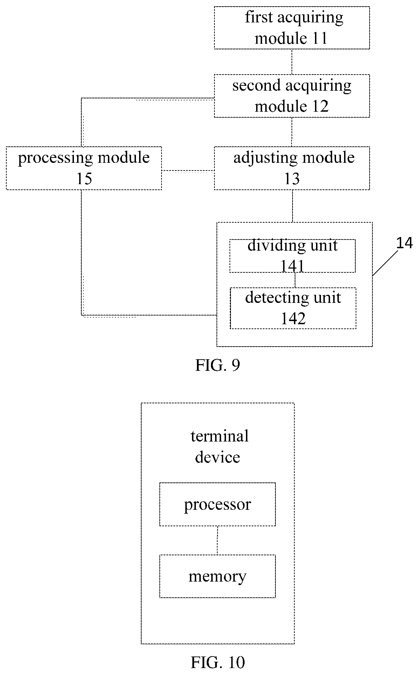

The target detection device according to embodiments of the present disclosure is further described below in combination with FIG. 9. FIG. 9 is a block diagram of a target detection device according to another embodiment of the present disclosure.

As illustrated in FIG. 9, on the basis of FIG. 8, the device further includes: a processing module 15, configured to scan a scene corresponding to the first scene image by the SLAM system to generate a three-dimensional point cloud corresponding to the scene, and adjust the three-dimensional point cloud according to the current position and pose information of the camera to make the adjusted three-dimensional point cloud correspond to a direction of the second scene image.

The detecting module 14 includes: a dividing unit 141 and a detecting unit 142.

The dividing unit 141 is configured to divide the second scene image to form a plurality of region proposals.

The detecting unit 142 is configured to perform the target detection on the plurality of region proposals, respectively.

In an example embodiment, the dividing unit 141 is configured to divide the second scene image based on the adjusted three-dimensional point cloud to form the plurality of region proposals.

In an example embodiment, the dividing unit 141 is configured to: divide the adjusted three-dimensional point cloud to form a plurality of three-dimensional regions; and project the plurality of three-dimensional regions to the second scene image to form the plurality of region proposals.

It should be noted that the implementation process and technical principle of the target detection device in this embodiment refer to the foregoing illustration of the target detection method in the embodiments of the first aspect, and details are not described herein again.

With the target detection method according to the embodiments of the present disclosure, before performing the target detection on the first scene image, the first scene image is adjusted based on the current position and pose information of the camera to obtain the second scene image adjusted, and the target detection is performed on the second scene image, so that the target detection can be performed on the scene image without data enhancement, the process is simple, the computing time and computing resources for the target detection are saved, and the efficiency of the target detection is improved. Moreover, the three-dimensional point cloud corresponding to the scene generated by the SLAM system is used to assist in generating the plurality of region proposals, so that the generated region proposals are more accurate and less in number. Since the number of the region proposals is reduced, the subsequent processing such as feature extraction on the region proposals takes less computing time and consumes less computing resources, thereby saving the computing time and computing resource for the target detection, and improving the efficiency of the target detection.

In order to realize the above embodiment, the present disclosure further provides a terminal device.

FIG. 10 is a block diagram of a terminal device according to an embodiment of the present disclosure.

As illustrated in FIG. 10, the terminal device includes: a memory, a processor, and computer programs stored in the memory and executable by the processor. When the processor executes the computer programs, the target detection method according to the embodiment described with reference to FIG. 2 is implemented.

It should be noted that the implementation process and technical principle of the terminal device in this embodiment refer to the foregoing illustration of the target detection method in the embodiment described with reference to FIG. 2, and details are not described herein again.

With the terminal device according to the embodiments of the present disclosure, after acquiring a first scene image captured by a camera, current position and pose information of the camera is acquired, the first scene image is adjusted based on the current position and pose information of the camera to obtain a second scene image adjusted, and a target detection is performed on the second scene image. In this way, the target detection can be performed on the scene image without data enhancement, the process is simple, the computing time and computing resources for the target detection are saved, and the efficiency of the target detection is improved.

In order to realize the above embodiment, the present disclosure further provides a computer readable storage medium, storing computer programs therein. When the computer programs are executed by a processor, the target detection method according to embodiments of the first aspect is implemented.

In order to realize the above embodiment, the present disclosure further provides a computer program. When instructions in the computer program are executed by a processor, the target detection method according to foregoing embodiments is implemented.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure.

In addition, terms such as "first" and "second" are used herein for purposes of description and are not intended to indicate or imply relative importance or significance. Thus, the feature defined with "first" and "second" may comprise one or more this feature.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

**Claims**

1. A target detection method, **characterized in that**, the target detection method comprises:

   acquiring (101) a first scene image captured by a camera, the first scene image comprising an object;
   acquiring (102) current position and pose information of the camera;
   adjusting (103) the first scene image based on the current position and pose information of the camera to obtain a second scene image, wherein said adjusting the first scene image based on the current position and the pose information of the camera comprises: determining a rotation angle and a rotation direction of the first scene image based on the current position and pose information of the camera; and rotating, based on the rotation angle and the rotation direction, the first scene image by the rotation angle in a direction opposite to the rotation direction, to obtain the second scene image, a horizon direction in the second scene image being parallel to a lateral direction of the second scene image; and
   performing (104) a target detection on the second scene image using a neural network, wherein in an orientation of the object in training data for training the neural network is the same as an orientation of the object in the second scene image, and the orientation of the object in the second scene image is the same as an actual orientation of the object.

2. The target detection method according to claim 1, wherein acquiring the current position and pose information of the camera, comprises:
   acquiring the current position and pose information of the camera by a simultaneous localization and mapping (SLAM) system.

3. The target detection method according to claim 1 further comprising:
   determining, based on the current position and pose information of the camera, that the first scene image meets an adjustment requirement; wherein the adjustment requirement refers to that the rotation angle of the first scene image is greater than 0 degree.

4. The target detection method according to claim 2, wherein performing the target detection on the second scene image, comprises:

   dividing (207) the second scene image to form a plurality of region proposals; and
   performing the target detection on the plurality of region proposals respectively.

5. The target detection method according to claim 4, further comprising:

   scanning (205) a scene corresponding to the first scene image by the SLAM system to generate a three-dimensional point cloud corresponding to the scene; and adjusting (206) the three-dimensional point cloud based on the current position and pose information of the camera, so as to make the three-dimensional point cloud correspond to a direction of the second scene image;
   or
   scanning a scene corresponding to the second scene image by the SLAM system to generate a three-dimensional point cloud corresponding to the scene.

6. The target detection method according to claim 5, wherein scanning the scene comprises:

   calibrating the camera to determine internal parameters of the camera; and
   scanning the scene using the calibrated camera to generate the three-dimensional point cloud corresponding to the scene through the SLAM system.

7. The target detection method according to claim 5 or 6, wherein dividing the second scene image to form the plurality of region proposals comprises: dividing the second scene image based on the three-dimensional point cloud to form the plurality of region proposals.

8. The target detection method according to claim 7, wherein dividing the second scene image based on the three-dimensional point cloud to form the plurality of region proposals, comprises:

dividing the three-dimensional point cloud to form a plurality of three-dimensional regions; and projecting the plurality of three-dimensional regions to the second scene image to form the plurality of region proposals.

9. The target detection method according to claim 8, wherein dividing the three-dimensional point cloud to form the plurality of three-dimensional regions, comprises:

merging three-dimensional points in the adjusted three-dimensional point cloud by a clustering algorithm to obtain a merged three-dimensional point cloud; and dividing the merged three-dimensional point cloud to form the plurality of three-dimensional regions.

10. The target detection method according to claim 8, wherein dividing the three-dimensional point cloud to form the plurality of three-dimensional regions, comprises: fitting three-dimensional points in the adjusted three-dimensional point cloud with a plurality of preset models to divide the three-dimensional point cloud into the plurality of three-dimensional regions respectively to the plurality of preset models.

11. The target detection method according to any of claims 4 to 10, wherein performing the target detection on the plurality of region proposals respectively, comprises:

identifying a category of each object in a region proposal using a classification algorithm; and determining a size of the object by performing a bounding box regression for the object to realizing the target detection on the region proposal.

12. The target detection method according to claim 11, wherein said identifying the category of each object in the region proposal using the classification algorithm, comprises: identifying, using the classification algorithm by a neural network, the category of each object in the region proposal.

13. A terminal device, comprising: a memory, a processor, and computer programs stored in the memory and executable by the processor, wherein when the processor executes the computer programs, the processor is caused to implement the target detection method according to any of claims 1 to 12.

14. A non-transitory computer readable storage medium, storing computer programs therein, wherein when the computer programs are executed by a processor, the processor is caused to implement the target detection method according to any of claims 1 to 12.

**Patentansprüche**

1. Zielerfassungsverfahren, **dadurch gekennzeichnet, dass** das Zielerfassungsverfahren umfasst:

Erfassen (101) eines ersten Szenenbildes, das durch eine Kamera aufgenommen wurde, wobei das erste Szenenbild ein Objekt umfasst; Erfassen (102) aktueller Positions- und Poseninformationen der Kamera; Anpassen (103) des ersten Szenenbildes basierend auf den aktuellen Positions- und Poseninformationen der Kamera, um ein zweites Szenenbild zu erhalten, wobei das Anpassen des ersten Szenenbildes basierend auf den aktuellen Positions- und Positionsinformationen der Kamera umfasst: Bestimmen eines Drehwinkels und einer Drehrichtung des ersten Szenenbildes basierend auf den aktuellen Positions- und Poseninformationen der Kamera; und Drehen, basierend auf dem Drehwinkel und der Drehrichtung, des ersten Szenenbildes um den Drehwinkel in einer Richtung entgegengesetzt zur Drehrichtung, um das zweite Szenenbild zu erhalten, wobei eine Horizontrichtung im zweiten Szenenbild parallel zu einer seitlichen Richtung des zweiten Szenenbildes ist; und Durchführen (104) einer Zielerfassung an dem zweiten Szenenbild unter Verwendung eines neuronalen Netzes, wobei eine Ausrichtung des Objekts in den Trainingsdaten zum Trainieren des neuronalen Netzes dieselbe ist wie eine Ausrichtung des Objekts im zweiten Szenenbild und die Ausrichtung des Objekts im zweiten Szenenbild dieselbe ist wie eine tatsächliche Ausrichtung des Objekts.

2. Zielerfassungsverfahren gemäß Anspruch 1, wobei das Erfassen der aktuellen Positions- und Poseninformationen der Kamera umfasst:

Erfassen der aktuellen Positions- und Poseninformationen der Kamera durch ein System zur simultanen Positionsbestimmung und Kartierung, SLAM (Simultaneous Localization and Mapping).

3. Zielerfassungsverfahren gemäß Anspruch 1, ferner umfassend:
Bestimmen, basierend auf den aktuellen Positions- und Poseninformationen der Kamera, dass das erste Szenenbild eine Anpassungsanforderung erfüllt; wobei sich die Anpassungsanforderung darauf bezieht, dass der Drehwinkel des ersten Szenenbildes größer als 0 Grad ist.

4. Zielerfassungsverfahren gemäß Anspruch 2, wobei das Durchführen der Zielerfassung an dem zweiten Szenenbild umfasst:

Aufteilen (207) des zweiten Szenenbildes, um eine Vielzahl von Bereichsvorschlägen zu bilden; und
Durchführen der Zielerfassung jeweils an der Vielzahl von Bereichsvorschlägen.

5. Zielerfassungsverfahren gemäß Anspruch 4, ferner umfassend:

Scannen (205) einer Szene, die dem ersten Szenenbild entspricht, durch das SLAM-System, um eine dreidimensionale Punktwolke zu erzeugen, die der Szene entspricht; und Anpassen (206) der dreidimensionalen Punktwolke basierend auf den aktuellen Positions- und Poseninformationen der Kamera, so dass die dreidimensionale Punktwolke einer Richtung des zweiten Szenenbildes entspricht;
oder
Scannen einer Szene, die dem zweiten Szenenbild entspricht, durch das SLAM-System, um eine dreidimensionale Punktwolke zu erzeugen, die der Szene entspricht.

6. Zielerfassungsverfahren gemäß Anspruch 5, wobei das Scannen der Szene umfasst:

Kalibrieren der Kamera, um interne Parameter der Kamera zu bestimmen; und
Scannen der Szene mit der kalibrierten Kamera, um durch das SLAM-System eine dreidimensionale Punktwolke zu erzeugen, die der Szene entspricht.

7. Zielerfassungsverfahren gemäß Anspruch 5 oder 6, wobei das Aufteilen des zweiten Szenenbildes, um eine Vielzahl von Bereichsvorschlägen zu bilden, umfasst:
Aufteilen des zweiten Szenenbildes basierend auf der dreidimensionalen Punktwolke, um die Vielzahl von Bereichsvorschlägen zu bilden.

8. Zielerfassungsverfahren gemäß Anspruch 7, wobei das Aufteilen des zweiten Szenenbildes basierend auf der dreidimensionalen Punktwolke, um die Vielzahl von Bereichsvorschlägen zu bilden, umfasst:

Aufteilen der dreidimensionalen Punktwolke, um eine Vielzahl von dreidimensionalen Bereichen zu bilden; und
Projizieren der Vielzahl von dreidimensionalen Bereichen auf das zweite Szenenbild, um die Vielzahl von Bereichsvorschlägen zu bilden.

9. Zielerfassungsverfahren gemäß Anspruch 8, wobei das Aufteilen der dreidimensionalen Punktwolke, um eine Vielzahl von dreidimensionalen Bereichen zu bilden, umfasst:

Zusammenführen dreidimensionaler Punkte in der angepassten dreidimensionalen Punktwolke durch einen Clustering-Algorithmus, um eine zusammengeführte dreidimensionale Punktwolke zu erhalten; und
Aufteilen der zusammengeführten dreidimensionalen Punktwolke, um die Vielzahl von dreidimensionalen Bereichen zu bilden.

10. Zielerfassungsverfahren gemäß Anspruch 8, wobei das Aufteilen der dreidimensionalen Punktwolke, um eine Vielzahl von dreidimensionalen Bereichen zu bilden, umfasst:
Ausrichten dreidimensionaler Punkte in der angepassten dreidimensionalen Punktwolke mit einer Vielzahl von voreingestellten Modellen, um die dreidimensionale Punktwolke in die Vielzahl von dreidimensionalen Bereichen bezogen auf die Vielzahl von voreingestellten Modellen zu unterteilen.

11. Zielerfassungsverfahren gemäß einem der Ansprüche 4 bis 10, wobei das Durchführen der Zielerfassung an der Vielzahl von Bereichsvorschlägen jeweils umfasst:

Identifizieren einer Kategorie jedes Objekts in einem Bereichsvorschlag unter Verwendung eines Klassifizierungsalgorithmus; und
Bestimmen einer Größe des Objekts durch Durchführen einer Begrenzungsrahmen-Regression für das Objekt, um die Zielerfassung an dem Bereichsvorschlag zu realisieren.

12. Zielerfassungsverfahren gemäß Anspruch 11, wobei das Identifizieren der Kategorie jedes Objekts im Bereichsvorschlag unter Verwendung eines Klassifizierungsalgorithmus umfasst:
Identifizieren, mithilfe des Klassifizierungsalgorithmus durch ein neuronales Netz, der Kategorie jedes Objekts im Bereichsvorschlag.

13. Endgerätvorrichtung, umfassend: einen Speicher, einen Prozessor und ein Computerprogramm, das im Speicher gespeichert und durch den Prozessor ausführbar ist, wobei, wenn der Prozessor die Computerprogramme ausführt, der Prozessor veranlasst wird, das Zielerfassungsverfahren gemäß einem der Ansprüche 1 bis 12 zu implementieren.

14. Nicht-transitorisches, computerlesbares Speichermedium, auf dem Computerprogramme gespeichert sind, wobei bei Ausführung der Computerprogramme durch einen Prozessor der Prozessor veranlasst wird, das Zielerfassungsverfahren gemäß einem der Ansprüche 1 bis 12 zu implementieren.

**Revendications**

1. Procédé de détection de cible, **caractérisé en ce que** le procédé de détection de cible comprend :

   l'acquisition (101) d'une première image de scène capturée par une caméra, la première image de scène comprenant un objet ; l'acquisition (102) d'informations de position et de pose actuelles de la caméra ; l'ajustement (103) de la première image de scène sur la base des informations de position et de pose actuelles de la caméra pour obtenir une seconde image de scène, dans lequel ledit ajustement de la première image de scène sur la base des informations de position et de pose actuelles de la caméra comprend : la détermination d'un angle de rotation et d'un sens de rotation de la première image de scène sur la base des informations de position et de pose actuelles de la caméra ; et la rotation, sur la base de l'angle de rotation et du sens de rotation, de la première image de scène de l'angle de rotation dans un sens opposé au sens de rotation, pour obtenir la seconde image de scène, une direction d'horizon dans la seconde image de scène étant parallèle à une direction latérale de la seconde image de scène ; et le fait d'effectuer (104) une détection de cible sur la seconde image de scène à l'aide d'un réseau neuronal, dans lequel une orientation de l'objet dans des données d'entraînement pour l'entraînement du réseau neuronal est identique à une orientation de l'objet dans la seconde image de scène, et l'orientation de l'objet dans la seconde image de scène est identique à une orientation réelle de l'objet.

2. Procédé de détection de cible selon la revendication 1, dans lequel l'acquisition des informations de position et de pose actuelles de la caméra comprend : l'acquisition des informations de position et de pose actuelles de la caméra par un système de localisation et de cartographie simultanées (SLAM).

3. Procédé de détection de cible selon la revendication 1, comprenant en outre : la détermination, sur la base des informations de position et de pose actuelles de la caméra, que la première image de scène répond à une exigence d'ajustement ; dans lequel l'exigence d'ajustement fait référence à un angle de rotation de la première image de scène supérieur à 0 degré.

4. Procédé de détection de cible selon la revendication 2, dans lequel la détection de cible sur la seconde image de scène comprend :

   la division (207) de la seconde image de scène pour former une pluralité de propositions de régions ; et le fait d'effectuer la détection de cible sur la pluralité de propositions de régions respectivement.

5. Procédé de détection de cible selon la revendication 4, comprenant en, outre :

   le balayage (205) d'une scène correspondant à la première image de scène par le système SLAM pour générer un nuage de points tridimensionnel correspondant à la scène ; et l'ajustement (206) du nuage de points tridimensionnel sur la base des informations de position et de pose actuelles de la caméra, afin que le nuage de points tridimensionnel corresponde à une direction de la seconde image de scène ; ou le balayage d'une scène correspondant à la seconde image de scène par le système SLAM pour générer un nuage de points tridimensionnel correspondant à la scène.

6. Procédé de détection de cible selon la revendication 5, dans lequel le balayage de scène comprend :

   l'étalonnage de la caméra pour déterminer des paramètres internes de la caméra ; et le balayage de la scène à l'aide de la caméra étalonnée pour générer le nuage de points tridimensionnel correspondant à la scène par l'intermédiaire du système SLAM.

7. Procédé de détection de cible selon la revendication 5 ou 6, dans lequel la division de la seconde image de scène pour former la pluralité de propositions de régions comprend : la division de la seconde image de scène sur la base du nuage de points tridimensionnel pour former la pluralité de propositions de régions.

8. Procédé de détection de cible selon la revendication 7, dans lequel la division de la seconde image de scène sur la base du nuage de points tridimensionnel pour former la pluralité de propositions de régions comprend :

la division du nuage de points tridimensionnel pour former une pluralité de régions tridimensionnelles ; et
la projection de la pluralité de régions tridimensionnelles sur la seconde image de scène pour former la pluralité de propositions de régions.

9. Procédé de détection de cible selon la revendication 8, dans lequel la division du nuage de points tridimensionnel pour former la pluralité de régions tridimensionnelles comprend :

la fusion de points tridimensionnels du nuage de points tridimensionnel ajusté par un algorithme de regroupement pour obtenir un nuage de points tridimensionnel fusionné ; et
la division du nuage de points tridimensionnel fusionné pour former la pluralité de régions tridimensionnelles.

10. Procédé de détection de cible selon la revendication 8, dans lequel la division du nuage de points tridimensionnel pour former la pluralité de régions tridimensionnelles comprend :
l'adaptation de points tridimensionnels du nuage de points tridimensionnel ajusté à une pluralité de modèles prédéfinis afin de diviser le nuage de points tridimensionnel en une pluralité de régions tridimensionnelles correspondant à la pluralité de modèles prédéfinis.

11. Procédé de détection de cible selon l'une quelconque des revendications 4 à 10, dans lequel le fait d'effectuer la détection de cible sur la pluralité de propositions de régions respectivement comprend :

l'identification d'une catégorie de chaque objet dans une proposition de région à l'aide d'un algorithme de classification ; et
la détermination d'une taille de l'objet en effectuant une régression de boîte englobante pour l'objet afin de réaliser la détection de la cible sur la proposition de région.

12. Procédé de détection de cible selon la revendication 11, dans lequel ladite identification de la catégorie de chaque objet dans la proposition de région à l'aide de l'algorithme de classification, comprend :
l'identification, à l'aide de l'algorithme de classification par un réseau neuronal, de la catégorie de chaque objet dans la proposition de région.

13. Dispositif terminal, comprenant : une mémoire, un processeur, et des programmes informatiques stockés dans la mémoire et exécutables par le processeur, dans lequel, lorsque le processeur exécute les programmes informatiques, le procédé est amené à mettre en œuvre le procédé de détection de cible selon l'une quelconque des revendications 1 à 12.

14. Support de stockage non transitoire lisible par ordinateur, contenant des programmes d'ordinateur, dans lequel, lorsque les programmes d'ordinateur sont exécutés par un processeur, le processeur est amené à mettre en œuvre le procédé de détection de cible selon l'une quelconque des revendications 1 à 12.

FIG. 1

acquiring a first scene image captured by a camera — 101

↓

acquiring current position and pose information of the camera — 102

↓

adjusting the first scene image based on the current position and pose information of the camera to obtain a second scene image — 103

↓

performing a target detection on the second scene image — 104

FIG. 2

A

B

FIG. 3

A（B）

FIG. 4

acquiring a first scene image captured by a camera — 201

acquiring current position and pose information of the camera by a simultaneous localization and mapping (SLAM) system — 202

determining a rotation angle of the first scene image based on the current position and pose information of the camera — 203

rotating the first scene image based on the rotation angle to obtain a second scene image — 204

scanning a scene corresponding to the first scene image by the SLAM system to generate a three-dimensional point cloud corresponding to the scene — 205

adjusting the three-dimensional point cloud based on the current position and pose information of the camera to make the adjusted three-dimensional point cloud correspond to a direction of the second scene image — 206

dividing the second scene image based on the adjusted three-dimensional point cloud to form a plurality of region proposals — 207

performing a target detection on the plurality of region proposals, respectively — 208

FIG. 5

FIG. 6

Scene image

5

FIG. 7

first acquiring
module 11

second acquiring
module 12

adjusting module 13

detecting module 14

FIG. 8

first acquiring
module 11

second acquiring
module 12

processing module
15

adjusting module
13

dividing unit
141

14

detecting unit
142

FIG. 9

terminal
device

processor

memory

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109784272 A
- CN 101202836 A
- US 2018012411 A1
- WO 2019092418 A1